# EUROPEAN PATENT SPECIFICATION

(11) **EP 2 555 310 B1**
(45) Date of publication and mention of the grant of the patent: **31.10.2018**
(21) Application number: 11759195.8
(22) Date of filing: 09.03.2011
(51) Int. Cl.: H01M 4/13, H01M 4/36, H01M 4/62, H01M 2/02, H01M 4/131, H01M 4/133, H01M 4/134, H01M 4/485, H01M 4/587, H01M 4/66, H01M 10/0525, H01M 10/0567, H01M 10/0569, H01M 4/505, H01M 4/525

(54) **NON-AQUEOUS ELECTROLYTE SECONDARY BATTERY**
SEKUNDÄRBATTERIE MIT NICHTWÄSSRIGEM ELEKTROLYT
BATTERIE SECONDAIRE À ÉLECTROLYTE NON AQUEUX

(30) Priority: 26.03.2010 JP 2010072818
(43) Date of publication of application: 06.02.2013
(73) Proprietor: NEC Energy Devices, Ltd., Chuo-ku Sagamihara-shi Kanagawa 252-5298 (JP)
(72) Inventor: KAWASAKI, Daisuke, Sagamihara-shi Kanagawa 252-5298 (JP); KANEKO, Shinako, Sagamihara-shi Kanagawa 252-5298 (JP); IRIYAMA, Jiro, Sagamihara-shi Kanagawa 252-5298 (JP)
(74) Representative: Vossius & Partner Patentanwälte Rechtsanwälte mbB
(86) International application number: PCT/JP2011/055472
(87) International publication number: WO 2011/118387

(56) References cited:
- JP-A- 2000 294 281
- JP-A- 2006 114 285
- JP-A- 2008 108 454
- JP-A- 2008 192 488
- JP-A- 2008 277 000
- JP-A- 2010 010 095
- JP-A- 2010 097 802
- JP-A- 2010 123 287
- JP-A- 2010 238 510
- US-A1- 2004 115 535
- US-A1- 2005 014 072

## Description

### Technical Field

An exemplary embodiment according to the present invention relates to a secondary battery and particularly relates to a nonaqueous electrolyte secondary battery.

### Background Art

With rapid expansion of e.g., notebook computer, mobile phone and electric car markets, high energy-density secondary batteries have been desired. Approaches for obtaining a high energy density secondary battery include a method of using a large-capacity negative electrode material and a method of using a nonaqueous electrolyte excellent in stability.

Patent Literature 1 discloses use of an oxide of silicon or silicate as a negative electrode active material of a secondary battery. Patent Literature 2 discloses a secondary-battery negative electrode including a carbon material particle capable of intercalating and deintercalating lithium ions, a metal particle capable of alloying with lithium, and an active material layer containing an oxide particle capable of intercalating and deintercalating lithium ions. Patent Literature 3 discloses a secondary-battery negative electrode material formed by coating the surface of particles including a structure in which silicon fine crystals are dispersed in a silicon compound, with carbon.

Patent Literatures 4 and 5 describe that if silicon is contained in a negative electrode active material, polyimide is used as a negative electrode binder.

Patent Literature 6 discloses that a halogenated ethylene carbonate is used as an electrolyte solvent. Patent Literatures 7 and 8 disclose that a fluorinated ether excellent in stability having, for example, the following structure, is used as a nonaqueous electrolyte.

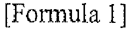

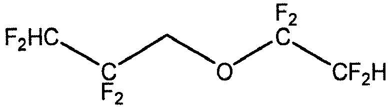

Patent Literature 9 describes that a negative electrode active material employs a first material made of a graphite material and a second material made of a composite obtained by coating a graphite material and silicon or a silicon compound with an amorphous carbon material; and that a cyclic carbonate derivative including a fluorine atom and a sulfur-containing compound including a cyclic structure are added to a nonaqueous electrolyte.

### Citation List

### Patent Literature

Patent Literature 1: JP6-325765A
Patent Literature 2: JP2003-123740A
Patent Literature 3: JP2004-47404A
Patent Literature 4: JP2004-22433A
Patent Literature 5: JP2007-95670A
Patent Literature 6: JP62-217567A
Patent Literature 7: JP11-26015A
Patent Literature 8: JP2008-192504A
Patent Literature 9: JP2008-311211A

US 2004/0115535 A1 relates to a negative electrode active material for nonaqueous electrolyte secondary battery, including carbonaceous particles and a Si Phase dispersed in the carbonaceous particles, wherein a half width of a diffraction peak of (220) plane in powder X-ray diffraction is 1,5 ° or more and 8° or less, and an average size of the Si phase is less than 100 nm.

US 2005/014072 A1 relates to an electrolyte for a lithium secondary battery which has a non-aqueous organic solvent including a γ-butyrolatctone and optionally a cyclic carbonate, an ester compound having an electron withdrawing group, and at least two salts.

JP 2006 114285 A refers to a nonaqueous electrolyte for the lithium secondary battery containing at least one kind of aromatic compounds polymerizable at 4.2-4.5 V of the potential of a working electrode, when metallic lithium is used as the counter electrode with respect to the platinum working electrode.

### Summary of Invention

### Technical Problem To Be Solved By Invention

However, the secondary battery, which is described in Patent Literature 1, using silicon oxide as a negative electrode active material has a problem in that if the secondary battery is charged or discharged at 45°C or more, capacity reduction due to a charge-discharge cycle significantly increases. The secondary-battery negative electrode described in Patent Literature 2 is effective for reducing volume change of the entire negative electrode in intercalating and deintercalating lithium, since three types of components have different charge-discharge potentials and volume expansion rates; however, many points including the relationship among three components in a coexistent state, a binder, a nonaqueous electrolyte, an electrode element structure and a jacket, which are indispensable for forming a nonaqueous electrolyte secondary battery, were not sufficiently studied. The secondary battery negative electrode material described in Patent Literature 3 is also effective for reducing volume change of the entire negative electrode; however, many points including a binder, a nonaqueous electrolyte, an electrode element structure and a jacket, which are indispensable for forming a nonaqueous electrolyte secondary battery, were not sufficiently studied.

In Patent Literatures 4 and 5, studies on the state of a negative electrode active material are insufficient. In addition, many points including a nonaqueous electrolyte, an electrode element structure and a jacket, which are indispensable for forming a nonaqueous electrolyte secondary battery, were not sufficiently studied.

The nonaqueous electrolytes described in Patent Literatures 6 and 7 are each used alone for improving storage properties and providing flame-resistance and oxidation resistance; however, whether a new effect is produced when it is used concomitantly with other substances was not studied. Furthermore, in Patent Literature 8, it is described, for example, that compatibility (phase separation is hard to occur) and solubility of an electrolyte salt are high if a fluorinated ether and a fluorinated ester are present together; however, many points including an effect, which may be produced by a specific combination of a negative electrode active material and a negative-electrode binder, were not sufficiently studied. More specifically, in Patent Literatures 6 to 8, many points including effects brought by combination of a negative electrode active material, a negative-electrode binder, an electrode element structure and a jacket, and a plurality of structural members which are indispensable for forming a nonaqueous electrolyte secondary battery, were not sufficiently studied.

In Patent Literature 9, a cyclic fluorinated carbonate is decomposed and forms a film on a negative electrode surface, with the result that decomposition of a nonaqueous electrolyte is suppressed to attain a long life of the nonaqueous electrolyte secondary battery. However, a carbonate compound is presumed to structurally easily generate CO₂ by decomposition as compared to an ether compound. In particular, when silicon is used as a negative electrode, cracking (generally referred to as "pulverization") occurs due to volume expansion during the charge-discharge time. As a result, the coating ratio with a coating film decreases and decomposition of a nonaqueous electrolyte cannot be suppressed in some cases.

Then, an exemplary embodiment according to the present invention is directed to provide a nonaqueous electrolyte secondary battery using a high-energy negative electrode and usable for a long time.

### Means For Solving Problem

An exemplary embodiment relates to a nonaqueous electrolyte secondary battery comprising:
an electrode element including a positive electrode and a negative electrode arranged so as to face each other;
a nonaqueous electrolyte; and
a jacket housing the electrode element and the nonaqueous electrolyte,
wherein the negative electrode comprises:
a negative electrode active material containing (a) a carbon material capable of intercalating and deintercalating lithium ions, (b) a metal capable of forming an alloy with lithium, and (c) a metal oxide capable of intercalating and deintercalating the lithium ions;
a negative electrode binder; and
a negative electrode collector,
the negative electrode active material is bound to the negative electrode collector with the negative electrode binder, and
the nonaqueous electrolyte comprises:
a nonaqueous solvent;
a cyclic fluorinated carbonate; and
a linear fluorinated ether, wherein the negative electrode binder is polyimide or polyamide imide.

### Advantageous Effects of Invention

According to the exemplary embodiment according to the present invention, it is possible to provide a nonaqueous electrolyte secondary battery using a high-energy negative electrode and usable for a long time.

### Brief Description of Drawings

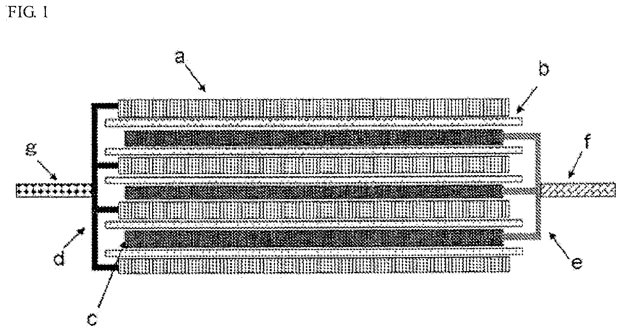

Figure 1 is a schematic sectional view showing a structure of an electrode element which a laminate type secondary battery includes.

### Description of Embodiment

The exemplary embodiment will be more specifically described below.

### <Nonaqueous electrolyte secondary battery>

A nonaqueous electrolyte secondary battery according to an exemplary embodiment comprises an electrode element including a positive electrode and a negative electrode arranged to face each other and a nonaqueous electrolyte which are housed in a jacket. The shape of the nonaqueous electrolyte secondary battery may be any one of a cylindrical type, a planar winding rectangular type, a laminate rectangular type, a coin type, a planar winding laminate type and a laminate type; The shape of the nonaqueous electrolyte secondary battery is preferably a laminate type. Now, a laminate type nonaqueous electrolyte secondary battery will be described below.

Figure 1 is a schematic sectional view showing a structure of an electrode element which a laminate type nonaqueous electrolyte secondary battery includes. The electrode element is formed by alternately laminating a plurality of positive electrodes c and a plurality of negative electrodes a with each separator b interposed between them. Positive electrode collectors e, which individual positive electrodes c include are mutually welded at the end portions not coated with the positive electrode active material and electrically connected. Further, to the welded portion, a positive electrode terminal f is welded. The negative electrode collectors d which individual negative electrodes a include are mutually welded at the end portions not coated with the negative electrode active material and electrically connected. Further, to the welded portion, a negative electrode terminal g is welded.

Since an electrode element including such a planar laminate structure, which has no small radius portion (region near a winding core of a winding structure or a region corresponding to a fold-peak portion), it has the advantage that it is hard to be adversely affected by volume change of an electrode due to charge-discharge, as compared to an electrode element including a winding structure. In other words, the electrode element is effective in the case of using an active material likely causing volume expansion. In contrast, in the electrode element including a winding structure, since an electrode is curved, the structure tends to deform when volume change occurs. Particularly, in the case of using a negative electrode active material such as a silicon active material causing a large volume change due to charge-discharge, in a secondary battery using an electrode element including a winding structure, capacity reduction due to charge-discharge becomes often significant.

However, an electrode element including a planar laminate structure has a problem in that if gas is generated between electrodes, the gas is likely to remain between the electrodes. This is because in the case of an electrode element including a winding structure, the interval between the electrodes is hard to spread because tension is applied to the electrodes, whereas in the case of an electrode element including a laminate structure, the interval between the electrodes tends to spread. If the jacket is formed of an aluminum laminate film, this problem becomes particularly significant.

In the exemplary embodiment, the aforementioned problems can be solved and a laminate type nonaqueous electrolyte secondary battery using a high-energy negative electrode can be also used for a long time.

### [1] Negative electrode

The negative electrode comprises a negative electrode active material bound to a negative electrode collector with a negative electrode binder so that the negative electrode collector is covered therewith. In addition, in the exemplary embodiment, as the negative electrode active material, (a) a carbon material capable of intercalating and deintercalating lithium ions, (b) a metal capable of forming an alloy with lithium and (c) a metal oxide capable of intercalating and deintercalating lithium ions are used.

As (a) the carbon material, graphite, amorphous carbon, diamond-like carbon, carbon nanotube or a composite of these can be used. Graphite herein, which has a high crystallinity, has a high electric conductivity, excellent adhesiveness to a negative electrode collector made of a metal such as copper, and excellent voltage flatness. Because of this, graphite is advantageous to designing a high-power and high-energy secondary battery. In contrast, as for amorphous carbon which has low crystallinity, since it is relatively low in volume expansion, it is highly effective to reduce volume expansion of the entire negative electrode, and in addition, deterioration due to non-uniformity such as crystal grain boundary and crystal defect is hard to occur. Therefore, the amorphous carbon is advantageous to designing a long-life and high-robustness secondary battery.

Examples of (b) the metal also include semimetals such as As, Sb, Bi, Si and Ge. As (b) the metal, Al, Si, Pb, Sn, In, Bi, Ag, Ba, Ca, Hg, Pd, Pt, Te, Zn, La or an alloy of two types or more of these can be used. Particularly, as (b) the metal, silicon (Si) is preferably included.

As (c) the metal oxide, silicon oxide, aluminum oxide, tin oxide, indium oxide, zinc oxide, lithium oxide or a composite of these can be used. Particularly, as (c) the metal oxide, silicon oxide is preferably included. This is because silicon oxide is relatively stable and is hard to cause a reaction with another compound. Furthermore, (c) the metal oxide is preferably an oxide of a metal constituting (b) the metal. Moreover, a single or two types or more elements selected from nitrogen, boron and sulfur can be added to (c) the metal oxide, for example, in an amount of 0.1 to 5 mass%. In this manner, the electric conductivity of (c) the metal oxide can be improved.

It is preferable that (c) the metal oxide wholly or partly has an amorphous structure. (c) The metal oxide having an amorphous structure can suppress volume expansion of (a) a carbon material and (b) a metal which are the other negative electrode active material and also suppress decomposition of a nonaqueous electrolyte. Although the mechanism of this is unclear, it is presumed that the amorphous structure of (c) the metal oxide has some influence on formation of a film on the interface between (a) the carbon material and a nonaqueous electrolyte. Furthermore, the amorphous structure has a relatively-few factor due to non-uniformity such as crystal grain boundary and crystal defects. Whether whole or part of (c) the metal oxide has an amorphous structure can be checked by X-ray diffraction measurement (general XRD measurement). Specifically, if (c) the metal oxide does not have an amorphous structure, a peak intrinsic to (c) the metal oxide is observed, whereas if the whole or part of (c) the metal oxide has an amorphous structure, it is observed that the peak intrinsic to (c) the metal oxide becomes wide.

Furthermore, it is preferable that (b) the metal is wholly or partly dispersed in (c) the metal oxide. If at least a portion of (b) the metal is dispersed in (c) the metal oxide, the volume expansion of the entire negative electrode can be further suppressed and also suppress decomposition of a nonaqueous electrolyte. Whether the whole or part of (b) the metal is dispersed in (c) the metal oxide can be checked by using transmission electron microscopic observation (general TEM observation) and energy dispersive X-ray spectrometry measurement (general EDX measurement) in combination. More specifically, this can be checked by observing a section of a sample containing (b) the metal particle and measuring the oxygen concentration of (b) the metal particles dispersed in (c) the metal oxide to confirm that the metal constituting (b) the metal particle is not converted into an oxide.

It is possible to form a negative electrode active material in which whole or part of (c) the metal oxide has an amorphous structure, and whole or part of (b) the metal is dispersed in (c) the metal oxide in such a composite of (a) a carbon material, (b) a metal and (c) a metal oxide, by a method disclosed, for example, in Patent Literature 3. More specifically, (c) a metal oxide is subjected to a CVD process under an atmosphere containing an organic gas such as methane gas, with the result that (b) the metal in (c) the metal oxide is nano-clustered to obtain a composite having a surface coated with (a) a carbon material. The composite can be used as a negative electrode active material.

The ratio of (a) a carbon material, (b) a metal and (c) a metal oxide is not particularly limited. The ratio of (a) the carbon material relative to the total of (a) the carbon material, (b) the metal and (c) the metal oxide is preferably 2 mass% or more and 50 mass% or less and more preferably 2 mass% or more and 30 mass% or less. The ratio of (b) the metal relative to the total of (a) the carbon material, (b) the metal and (c) the metal oxide is preferably 5 mass% or more and 90 mass% or less and more preferably 20 mass% or more and 50 mass% or less. The ratio of (c) the metal oxide relative to the total of (a) the carbon material, (b) the metal and (c) the metal oxide is preferably 5 mass% or more and 90 mass% or less and more preferably 40 mass% or more and 70 mass% or less.

As the negative electrode binder, of the invention, polyimide or polyamide imide is used, because binding property is high. At this time, the content of the negative electrode binder in the negative electrode is preferably 5 to 25 parts by mass, and more preferably 7 to 20 parts by mass, relative to 100 parts by mass of the negative electrode in consideration of the trade-off relationship between "sufficient binding property" and "high energy production".

The negative electrode collector is preferably copper, nickel and silver in view of electrochemical stability. The form thereof includes foil, planar-plate form and mesh form.

The negative electrode active material layer can be formed by a general slurry coating method. More specifically, negative electrode slurry is applied to a negative electrode collector, and dried, if necessary, compression-molded to manufacture a negative electrode. The negative electrode slurry can be obtained by dispersing a negative electrode active material together with a negative electrode binder in a solvent such as N-methyl-2-pyrrolidone (NMP) and kneading the mixture. Examples of a coating method of negative electrode slurry include a doctor blade method and a die-coater method. At this time, a negative electrode active material layer includes the negative electrode active material bound to the negative electrode collector with the negative electrode binder so that the negative electrode collector is covered therewith. Alternatively, after a negative electrode active material layer is formed in advance, a metal thin film serving as a negative electrode collector can be formed by a method such as vapor deposition and sputtering to manufacture a negative electrode.

### [2] Positive electrode

A positive electrode is, for example, formed by bounding a positive electrode active material to a positive electrode collector with a positive electrode binder so that the positive electrode collector is covered therewith.

Examples of the positive electrode active material can include the following materials:
lithium manganates including a laminate structure or a spinel structure such as LiMnO₂ and LiₓMn₂O₄ (0 < x < 2);
LiCoO₂, LiNiO₂ or those obtained by replacing a part of these transition metals with another metal;
lithium transition metal oxides such as LiNi_{1/3}Co_{1/3}Mn_{1/3}O₂ in which a specific transition metal does not exceed a half; and
these lithium transition metal oxides containing Li in an excessively larger amount than the stoichiometric composition.

Particularly, Li_{α}Ni_{β}Co_{γ}Al_{δ}O₂ (1 ≤ α ≤ 1.2, β + γ + δ = 1, β ≥ 0.7, γ ≤ 0.2), Li_{α}Ni_{β}Co_{γ}Mn_{δ}O₂ (1 ≤ α < 1.2, β + γ + δ =1, β ≥ 0.6, γ ≤ 0.2) or Li_{α}Ni_{β}Co_{γ}Mn_{δ}Al_{ε}Mg_{ζ}O₂ (1 ≤ α ≤ 1.2, β + γ + δ + ε + ζ = 1, β ≥ 0.5, 0 ≤ γ ≤ 0.2, 0.01 ≤ δ ≤ 0.49 ≤ 0 ≤ ε ≤ 0.3, 0 ≤ ζ ≤ 0.1) is preferable. The positive electrode active materials can be used alone or in combination of two types or more.

As the positive electrode binder, the same compounds as mentioned for the negative electrode binder can be used. Of them, in view of general versatility and low cost, polyvinylidene fluoride is preferable. The amount of positive electrode binder to be used is preferably 2 to 10 parts by mass relative to 100 parts by mass of the positive electrode active material in consideration of the trade-off relationship between "sufficient binding property" and "high energy production".

As the positive electrode collector, in view of electrochemical stability, aluminum, nickel, silver, SUS, a valve metal, and an alloy of these can be used. Particularly, aluminium is preferable.

In order to reduce impedance, a conductive aid may be added to a positive electrode active material layer including a positive electrode active material. Examples of the conductive aid include carbonaceous fine particles of graphite, carbon black and acetylene black.

### [3] Nonaqueous electrolyte

As the nonaqueous electrolyte, a nonaqueous solvent containing a cyclic fluorinated carbonate and a linear fluorinated ether and having a supporting salt dissolved therein is used.

The nonaqueous solvent is often used as a solvent for a nonaqueous electrolyte. Specific examples thereof include carbonates, chlorinated hydrocarbons, ethers, ketones, esters and nitriles. As the nonaqueous solvent, it is preferable to use a solvent mixture containing at least one type of high dielectric nonaqueous solvent such as ethylene carbonate (EC), propylene carbonate (PC), γ-butyrolactone (GBL) and those substituted with fluorine, and at least one type of low dielectric nonaqueous solvent such as esters except diethyl carbonate (DEC), dimethyl carbonate (DMC), ethylmethyl carbonate (EMC) and γ-butyrolactone, ethers and those substituted with fluorine. However, it is defined that the "nonaqueous solvent" does not include a cyclic fluorinated carbonate and a linear fluorinated ether. More specifically, the "nonaqueous solvent" refers to a liquid medium contained in a nonaqueous electrolyte except a cyclic fluorinated carbonate and a linear fluorinated ether.

Examples of the linear fluorinated ether is obtained by substituting a single or a plurality of hydrogen atoms of a linear ether such as methyl ether, methyl ethyl ether, diethyl ether, methyl propyl ether, ethyl propyl ether, dipropyl ether, methyl butyl ether, ethyl butyl ether and propyl butyl ether with a fluorine atom(s). As the linear fluorinated ether, a compound represented by the following formula (1) is preferable:

H-(CX¹X²-CX³X⁴)ₙ-CH₂O-CX⁵X⁶-CX⁷X⁸-H (1)

In the formula (1), n is 1, 2, 3 or 4; X¹ to X⁸ are each independently a fluorine atom or a hydrogen atom, with the proviso that at least one of X¹ to X⁴ is a fluorine atom and at least one of X⁵ to X⁸ is a fluorine atom. Furthermore, the atomic ratio of fluorine atoms to hydrogen atoms binding to the compound of the formula (1), [total number of fluorine atoms)/(total number of hydrogen atoms)] ≥ 1.

Furthermore, the following formula (2) is more preferable.

H-(CF₂-CF₂)ₙ-CH₂O-CF₂-CF₂-H (2)

In the formula (2), n is 1 or 2. The linear fluorinated ethers can be used singly or in combination of two types or more.

As the content of a linear fluorinated ether in a nonaqueous electrolyte increases, an effect of suppressing gas generation during a high temperature cycle time and durability against overcurrent/overvoltage brought by failures such as an external apparatus and operation mistake (a kind of so-called robustness) are improved. In contrast, as the content of a linear fluorinated ether in a nonaqueous electrolyte decreases, improvement of output characteristic due to lower viscosity and low cost can be attained. In view of the aforementioned points, the content of a linear fluorinated ether in a nonaqueous electrolyte is preferably 10 to 50 parts by volume relative to the total of the nonaqueous solvent and the linear fluorinated ether (100 parts by volume) and more preferably 15 to 30 parts by volume.

The cyclic fluorinated carbonate is obtained by substituting a single or a plurality of hydrogen atoms of a cyclic carbonate such as propylene carbonate (PC), ethylene carbonate (EC), butylene carbonate (BC) and vinylene carbonate (VC) with a fluorine atom(s). Specific examples of the cyclic fluorinated carbonate include the following ones:
fluoroethylene carbonates such as 4-fluoro-1,3-dioxolan-2-one, 4,4-difluoro-1,3-dioxolan-2-one, 4,5-difluoro-1,3-dioxolan-2-one, and 4,5-difluoro-1,3-dioxolan-2-one;
fluoropropylene carbonates such as 4-fluoromethyl-1,3-dioxolan-2-one, 4-difluoromethyl-1,3-dioxolan-2-one, 4-trifluoromethyl-1,3-dioxolan-2-one, 4-fluoro-4-methyl-1,3-dioxolan-2-one, 4-fluoro-4-fluoromethyl-1,3-dioxolan-2-one, 4-fluoro-4-difluoromethyl-1,3-dioxolan-2-one, 4-fluoro-4-trifluoromethyl-1,3-dioxolan-2-one, 5 -fluoro-4-methyl-1,3-dioxolan-2-one, 5-fluoro-4-fluoromethyl-1,3-dioxolan-2-one, 5-fluoro-4-difluoromethyl-1,3-dioxolan-2-one, 5-fluoro-4-trifluoromethyl-1,3-dioxolan-2-one, 4,5-difluoro-4-trifluoromethyl-1,3-dioxolan-2-one, and 4,5,5-difluoro-4-trifluoromethyl-1,3-dioxolan-2-one;
fluorobutylene carbonates such as 4-(2-fluoroethyl)-1,3-dioxolan-2-one, 4-(2,2-difluoroethyl)-1,3-dioxolan-2-one, 4-(2,2,2-trifluoroethyl)-1,3-dioxolan-2-one, 4-(1-fluoroethyl)-1,3-dioxolan-2-one, 4-(1,1-difluoroethyl)-1,3-dioxolan-2-one, 4-(1,2-difluoroethyl)-1,3-dioxolan-2-one, 4-(1,1,2-trifluoroethyl)-1,3-dioxolan-2-one, 4-(1,1,2,2-tetrafluoroethyl)-1,3-dioxolan-2-one, 4-(1,1,2,2,2-pentafluoroethyl)-1,3-dioxolan-2-one, 4-fluoro-4-(2-fluoroethyl)-1,3-dioxolan-2-one, 4-fluoro-4-(2,2-difluoroethyl)-1,3-dioxolan-2-one, 4-fluoro-4-(2,2,2-trifluoroethyl)-1,3-dioxolan-2-one, 4-fluoro-4-(1-fluoroethyl)-1,3-dioxolan-2-one, 4-fluoro-4-(1,1-difluoroethyl)-1,3-dioxolan-2-one, 4-fluoro-4-(1,2-difluoroethyl)-1,3-dioxolan-2-one, 4-fluoro-4-(1,1,2-trifluoroethyl)-1,3-dioxolan-2-one, 4-fluoro-4-(1,1,2,2-tetrafluoroethyl)-1,3-dioxolan-2-one, 4-fluoro-4-(1,1,2,2,2-pentafluoroethyl)-1,3-dioxolan-2-one, 5-fluoro-4-(2-fluoroethyl)-1,3-dioxolan-2-one, 5-fluoro-4-(2,2-difluoroethyl)-1,3-dioxolan-2-one, 5-fluoro-4-(2,2,2-trifluoroethyl)-1,3-dioxolan-2-one, 5-fluoro-4-(1-fluoroethyl)-1,3-dioxolan-2-one, 5-fluoro-4-(1,1-difluoroethyl)-1,3-dioxolan-2-one, 5-fluoro-4-(1,2-difluoroethyl)-1,3-dioxolan-2-one, 5-fluoro-4-(1,1,2-trifluoroethyl)-1,3-dioxolan-2-one, 5-fluoro-4-(1,1,2,2-tetrafluoroethyl)-1,3-dioxolan-2-one, 5-fluoro-4-(1,1,2,2,2-pentafluoroethyl)-1,3-dioxolan-2-one, 4,5-difluoro-4-(2-fluoroethyl)-1,3-dioxolan-2-one, 4,5-difluoro-4-(2,2-difluoroethyl)-1,3-dioxolan-2-one, 4,5-difluoro-4-(2,2,2-trifluoroethyl)-1,3-dioxolan-2-one, 4,5-difluoro-4-(1-fluoroethyl)-1,3-dioxolan-2-one, 4,5-difluoro-4-(1,1-difluoroethyl)-1,3-dioxolan-2-one, 4,5-difluoro-4-(1,2-difluoroethyl)-1 ,3-dioxolan-2-one, 4,5-difluoro-4-(1,1,2-trifluoroethyl)-1,3-dioxolan-2-one, 4,5-difluoro-4-(1,1,2,2-tetrafluoroethyl)-1,3-dioxolan-2-one, 4,5-difluoro-4-(1,1,2,2,2-pentafluoroethyl)-1,3-dioxolan-2-one, 5,5-difluoro-4-(2-fluoroethyl)-1,3-dioxolan-2-one, 5,5-difluoro-4-(2,2-difluoroethyl)-1,3-dioxolan-2-one, 5,5-difluoro-4-(2,2,2-trifluoroethyl)-1,3-dioxolan-2-one, 5,5-difluoro-4-(1-fluoroethyl)-1,3-dioxolan-2-one, 5,5-difluoro-4-(1,1-difluoroethyl)-1,3-dioxolan-2-one, 5,5-difluoro-4-(1,2-difluoroethyl)-1,3-dioxolan-2-one, 5,5-difluoro-4-(1,1,2-trifluoroethyl)-1,3-dioxolan-2-one, 5,5-difluoro-4-(1,1,2,2-tetrafluoroethyl)-1 ,3-dioxolan-2-one, 5,5-difluoro-4-(1,1,2,2,2-pentafluoroethyl)-1,3-dioxolan-2-one, 4,5,5-trifluoro-4-(2-fluoroethyl)-1,3-dioxolan-2-one, 4,5,5-trifluoro-4-(2,2-difluoroethyl)-1,3-dioxolan-2-one, 4,5,5-trifluoro-4-(2,2,2-trifluoroethyl)-1,3-dioxolan-2-one, 4,5,5-trifluoro-4-(1-fluoroethyl)-1,3-dioxolan-2-one, 4,5,5-trifluoro-4-(1,1-difluoroethyl)-1,3-dioxolan-2-one, 4,5,5-trifluoro-4-(1,2-difluoroethyl)-1,3-dioxolan-2-one, 4,5,5-trifluoro-4-(1,1,2-trifluoroethyl)-1,3-dioxolan-2-one, 4,5,5-trifluoro-4-(1,1,2,2-tetrafluoroethyl)-1,3-dioxolan-2-one, and 4,5,5-trifluoro-4-(1,1,2,2,2-pentafluoroethyl)-1,3-dioxolan-2-one; and
Fluorovinylene carbonates such as 4-fluoro-1,3-dioxol-2-one and 4,4-difluoro-1,3-dioxol-2-one.

These cyclic fluorinated carbonates can be used singly or in combination of two types or more.

However, if the content of the cyclic fluorinated carbonate is excessively large, gas may be generated and thus the cyclic fluorinated carbonate is preferably used in an appropriate amount. Although the details are unknown, a linear fluorinated ether as a relatively stable nonaqueous electrolyte has the potential for being too stable to form a negative electrode surface film (so-called solid electrolyte interface film, SEI film). Furthermore, a cyclic fluorinated carbonate has the potential for having an effect of facilitating formation of the SEI film of a linear fluorinated ether. Therefore, it is presumed that the reaction between the linear fluorinated ether and the negative electrode may be properly facilitated. In view of the aforementioned points, the content of the cyclic fluorinated carbonate in a nonaqueous electrolyte is preferably 1 to 10 parts by mass, and more preferably 2 to 5 parts by mass, relative to 100 parts by mass of the total of the nonaqueous solvent and the linear fluorinated ether.

Specific examples of the supporting salts include lithium salts such as LiPF₆, LiAsF₆, LiAlCl₄, LiClO₄, LiBF₄, LiSbF₆, LiCF₃SO₃, LiC₄F₉SO₃, Li(CF₃SO₂)₂ and LiN(CF₃SO₂)₂. The supporting salts can be used singly or in combination of two types or more.

The nonaqueous electrolyte produces a specific effect when as a specific negative electrode is used, more specifically when (a) a carbon material capable of intercalating and deintercalating lithium ions, (b) a metal such as silicon capable of forming an alloy with lithium and (c) a metal oxide such as silicon oxide capable of intercalating and deintercalating lithium ions are used as a negative electrode active material.

More specifically, a carbonate compound is presumed to molecular-structurally easily generate CO₂ by decomposition, as compared to an ether compound. In particular, when silicon is used as a negative electrode, cracking (generally referred to as "pulverization") occurs due to volume expansion during the charge-discharge time. As a result, the coating ratio with a coating film decreases and decomposition of a nonaqueous electrolyte cannot be suppressed in some cases. Under such an environment, it is conceivable that a specific effect is exerted by the synergistic effect of the following measures.
(1) A nonaqueous electrolyte, which molecular-structurally is hard to generate CO₂, is used.
(2) A plurality of negative electrode active materials different in volume expansion rate are used in combination to reduce volume expansion and decrease the degree of cracking.

In the exemplary embodiment, as the measure (1), a nonaqueous electrolyte containing a linear fluorinated ether is used; and as the measure (2), a specific negative electrode active material such as a silicon-silicon oxide-carbon composite is used.

Furthermore, when a specific negative electrode binder is used, the aforementioned specific effect tends to increase. Although the details are unknown, in the case in which a linear fluorinated ether and a cyclic fluorinated carbonate are copresent in a nonaqueous electrolyte, it is conceivable that selective decomposition and an adsorption and elimination reaction of the linear fluorinated ether and the cyclic fluorinated carbonate are facilitated by using a nitrogen-containing negative electrode binder such as polyimide or polyamide-imide as the negative electrode binder. The influence on such a selective decomposition and adsorption and elimination reaction is presumed based on the fact that the cycle behavior at a high temperature of about 60°C differs from the cycle behavior at room temperature of about 20°C. Likewise, facilitating the reaction between a linear fluorinated ether and a cyclic fluorinated carbonate concomitantly in the presence of a specific negative electrode binder such as a polyimide or a polyamide-imide is considered to be advantageous to attaining a long life of a nonaqueous electrolyte secondary battery using silicon as a negative electrode.

### [4] Separator

As the separator, a porous film such as polypropylene or polyethylene and unwoven cloth can be used. Furthermore, they may be laminated and used as the separator.

### [5] Structure of electrode element

Examples of the electrode-element structure include a cylindrical winding structure, a planar winding structure, a zigzag structure and a laminate structure. A laminate structure is particularly preferable. Since an electrode element including a planar laminate structure, which has no small radius portion (region near a winding core of a winding structure or a region corresponding to a fold-back portion), in the case of using an active substance which significantly changes its volume due to charge-discharge, it is advantage that the electrode element is hard to be adversely affected by volume change of the electrode due to charge-discharge, as compared to an electrode element having a winding structure.

### [6] Jacket

As the jacket, as long as it is stable in a nonaqueous electrolyte and has a sufficient vapor barrier, any material can be appropriately selected. For example, a can mainly made of aluminium, a can mainly made of iron or stainless steel, a laminate resin, etc. can be used. Particularly, a laminate resin is preferable. In the case of a nonaqueous electrolyte secondary battery using a laminate resin as a jacket, a laminate film such as polypropylene or polyethylene coated with aluminum or silica can be used as the jacket. Particularly, in view of e.g., general versatility and cost performance, an aluminium laminate film is preferably used.

In the case of a nonaqueous electrolyte secondary battery using a laminate film as a jacket, if gas is generated, deformation of an electrode element becomes significantly larger, as compared to a nonaqueous electrolyte secondary battery using a metal can as a jacket. This is because the laminate film is easily deformed, as compared to a metal can by the inner pressure of a nonaqueous electrolyte secondary battery. Furthermore, in sealing a nonaqueous electrolyte secondary battery using a laminate film as a jacket, usually, the inner pressure of the battery becomes lower than the atmospheric pressure. Accordingly, no extra space is present in the interior portion of the battery, if gas is generated, the gas generation is directly easy to leading to volume change of the battery and deform of the electrode element.

However, the nonaqueous electrolyte secondary battery according to the exemplary embodiment can overcome the aforementioned problems. By virtue of this, a laminate type nonaqueous electrolyte secondary battery having an excellent degree of freedom in cell capacity design can be provided at low cost by changing the number of laminate layers. Examples

The exemplary embodiment will be more specifically described by way of Examples below.

### (Example 1)

Example 1 is a Reference Example not being part of the invention. A silicon oxide powder (a mixture of silicon oxide and silicon) represented by the general formula SiO was subjected to a CVD process under an atmosphere containing methane gas at 1150°C for 6 hours to obtain a silicon-silicon oxide-carbon composite (negative electrode active material) in which silicon of silicon oxide was nano-clustered and the surface of which was coated with carbon. The mass ratio of silicon/silicon oxide/carbon was controlled so as to be about 29/61/10.

The above mentioned negative electrode active material (an average particle size D50 = 5 µm) and PVdF (trade name: KF polymer #9210, manufactured by KUREHA Corporation) serving as a negative electrode binder were weighed so as to satisfy a mass ratio of 80 : 20, and mixed with n-methylpyrrolidone to prepare negative electrode slurry. The negative electrode slurry was applied to the surface of copper foil of 10 µm in thickness in an amount of 2.5 mg per cm² and then dried. Similarly, the negative electrode slurry was also applied to the rear surface of the copper foil and then dried. Thereafter, the resultant foil was cut into pieces of 170 mm × 88 mm in size to prepare negative electrodes.

Lithium nickelate (LiNi_{0.80}Co_{0.15}Al_{0.15}O₂) serving as a positive electrode active material, carbon black serving as a conductive aid and polyvinylidene fluoride serving as a positive electrode binder were weighed so as to satisfy a mass ratio of 90 : 5 : 5, and mixed with n-methylpyrrolidone to prepare positive electrode slurry. The positive electrode slurry was applied to a surface of aluminum foil of 20 µm in thickness in an amount of 20 mg per cm² and then dried and pressed. Similarly, the positive electrode slurry was also applied to the rear surface of the aluminum foil and then dried and pressed. Thereafter, the resultant foil was cut into pieces of 166 mm × 84 mm in size to prepare positive electrodes.

The obtained 8 positive electrode layers and 9 negative electrode layers were alternately laminated with each porous polypropylene film serving as a separator interposed between them. The end portions of the positive electrode collectors not coated with the positive electrode active material and the end portions of the negative electrode collectors not coated with the negative electrode active material were separately welded. A positive electrode terminal made of aluminum and a negative electrode terminal made of nickel were welded to the respective welded portions to obtain an electrode element including a planar laminate structure.

Herein, the nonaqueous electrolyte was used by dissolving LiPF₆ in a concentration of 1 mole/L and further a cyclic fluorinated carbonate (4-fluoro-1,3-dioxolan-2-one) in a concentration of 5 wt%, in a mixture containing a nonaqueous solvent, which contained EC/PC/DMC/EMC/DEC mixed in a mixing ratio of 1/1/2/2/2 (volume ratio), and a linear fluorinated ether (HF₂C-CF₂-CH₂-O-CF₂-CF₂H), in a volume ratio of 80/20 (EC/PC/DMC/EMC/DEC/HF₂C-CF₂-CH₂-O-CF₂-CF₂H = 10/10/20/20/20/20).

The above mentioned electrode element was packaged by an aluminum laminate film serving as a jacket, and two sides including a tab were sealed by a hot sealing machine to obtain a nonaqueous electrolyte secondary battery. Since one of the sides was a fold back portion of the aluminum laminate, it was not sealed.

### (Example 2)

The same manner as in Reference Example 1 was performed except that polyimide (trade name: U Varnish A, manufactured by Ube Industries, Ltd.) was used as a negative electrode binder and negative electrode slurry was applied to copper foil and dried and thereafter, further treated with heat at 350°C in a nitrogen atmosphere.

### (Example 3)

The same manner as in Reference Example 1 was performed except that polyamide-imide (trade name: Vylomax (registered trademark) manufactured by Toyobo Co., Ltd.) was used as a negative electrode binder.

### (Example 4)

The same manner as in Example 2 was performed except that the mixing ratio of a negative electrode active material and a negative electrode binder was 95 : 5 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 90/10 by volume (more specifically, EC/PC/DMC/EMC/DEC/HF₂C-CF₂-CH₂-O-CF₂-CF₂H = 11.25/11.25/22.5/22.5/22.5/10), and the mixing ratio of a cyclic fluorinated carbonate (4-fluoro-1,3-dioxolan-2-one) was 1 wt%.

### (Example 5)

The same manner as in Example 2 was performed except that the mixing ratio of a negative electrode active material and a negative electrode binder was 95 : 5 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 90/10 by volume (more specifically, EC/PC/DMC/EMC/DEC/HF₂C-CF₂-CH₂-O-CF₂-CF₂H = 11.25/11.25/22.5/22.5/22.5/10), and the mixing ratio of a cyclic fluorinated carbonate (4-fluoro-1,3-dioxolan-2-one) was 10 wt%.

### (Example 6)

The same manner as in Example 2 was performed except that the mixing ratio of a negative electrode active material and a negative electrode binder was 95 : 5 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 50/50 by volume (more specifically, EC/PC/DMC/EMC/DEC/HF₂C-CF₂-CH₂-O-CF₂-CF₂H = 6.25/6.25/12.5/12.5/12.5/50), and the mixing ratio of a cyclic fluorinated carbonate (4-fluoro-1,3-dioxolan-2-one) was 1 wt%.

### (Example 7)

The same manner as in Example 2 was performed except that the mixing ratio of a negative electrode active material and a negative electrode binder was 95 : 5 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 50/50 by volume (more specifically, EC/PC/DMC/EMC/DEC/HF₂C-CF₂-CH₂-O-CF₂-CF₂H = 6.25/6.25/12.5/12.5/12.5/50), and the mixing ratio of a cyclic fluorinated carbonate (4-fluoro-1,3-dioxolan-2-one) was 10 wt%.

### (Example 8)

The same manner as in Example 2 was performed except that the mixing ratio of a negative electrode active material and a negative electrode binder was 75 : 25 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 90/10 by volume (more specifically, EC/PC/DMC/EMC/DEC/HF₂C-CF₂-CH₂-O-CF₂-CF₂H = 11.25/11.25/22.5/22.5/22.5/10), and the mixing ratio of a cyclic fluorinated carbonate (4-fluoro-1,3-dioxolan-2-one) was 1 wt%.

### (Example 9)

The same manner as in Example 2 was performed except that the mixing ratio of a negative electrode active material and a negative electrode binder was 75 : 25 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 90/10 by volume (more specifically, EC/PC/DMC/EMC/DEC/HF₂C-CF₂-CH₂-O-CF₂-CF₂H = 11.25/11.25/22.5/22.5/22.5/10), and the mixing ratio of a cyclic fluorinated carbonate (4-fluoro-1,3-dioxolan-2-one) was 10 wt%.

### (Example 10)

The same manner as in Example 2 was performed except that the mixing ratio of a negative electrode active material and a negative electrode binder was 75 : 25 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 50/50 by volume (more specifically, EC/PC/DMC/EMC/DEC/HF₂C-CF₂-CH₂-O-CF₂-CF₂H = 6.25/6.25/12.5/12.5/12.5/50), and the mixing ratio of a cyclic fluorinated carbonate (4-fluoro-1,3-dioxolan-2-one) was 1 wt%.

### (Example 11)

The same manner as in Example 2 was performed except that the mixing ratio of a negative electrode active material and a negative electrode binder was 75 : 25 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 50/50 by volume (more specifically, EC/PC/DMC/EMC/DEC/HF₂C-CF₂-CH₂-O-CF₂-CF₂H = 6.25/6.25/12.5/12.5/12.5/50), and the mixing ratio of a cyclic fluorinated carbonate (4-fluoro-1,3-dioxolan-2-one) was 10 wt%.

### (Comparative Example 1)

The same manner as in Example 2 was performed except that silicon (an average particle diameter D50 = 20 µm) was used as the negative electrode active material.

### (Comparative Example 2)

The same manner as in Example 2 was performed except that silicon (an average particle diameter D50 = 20 µm) was used as the negative electrode active material, the mixing ratio of the negative electrode active material and the negative electrode binder was 80 : 20 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 100/0 by volume (more specifically, EC/PC/DMC/EMC/DEC/HF₂C-CF₂-CH₂-O-CF₂-CF₂H = 12.5/12.5/25/25/25/0), and the mixing ratio of a cyclic fluorinated carbonate (4-fluoro-1,3-dioxolan-2-one) was 5 wt%.

### (Comparative Example 3)

The same manner as in Example 2 was performed except that silicon (an average particle diameter D50 = 20 µm) was used as the negative electrode active material, the mixing ratio of the negative electrode active material and the negative electrode binder was 80 : 20 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 80/20 by volume (more specifically, EC/PC/DMC/EMC/DEC/HF₂C-CF₂-CH₂-O-CF₂-CF₂H = 10/10/20/20/20/20), and the mixing ratio of a cyclic fluorinated carbonate (4-fluoro-1,3-dioxolan-2-one) was 0 wt%.

### (Comparative Example 4)

The same manner as in Example 2 was performed except that silicon oxide (an average particle diameter D50 = 20 µm) was used as the negative electrode active material.

### (Comparative Example 5)

The same manner as in Example 2 was performed except that silicon oxide (an average particle diameter D50 = 20 µm) was used as the negative electrode active material, the mixing ratio of the negative electrode active material and the negative electrode binder was 80 : 20 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 100/0 by volume (more specifically, EC/PC/DMC/EMC/DEC/HF₂C-CF₂-CH₂-O-CF₂-CF₂H = 12.5/12.5/25/25/25/0), and the mixing ratio of a cyclic fluorinated carbonate (4-fluoro-1,3-dioxolan-2-one) was 5 wt%.

### (Comparative Example 6)

The same manner as in Example 2 was performed except that silicon oxide (an average particle diameter D50 = 20 µm) was used as the negative electrode active material, the mixing ratio of the negative electrode active material and the negative electrode binder was 80 : 20 (mass ratio), the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 80/20 by volume (more specifically, EC/PC/DMC/EMC/DEC/HF₂C-CF₂-CH₂-O-CF₂-CF₂H = 10/10/20/20/20/20), and the mixing ratio of a cyclic fluorinated carbonate (4-fluoro-1,3-dioxolan-2-one) was 0 wt%.

### (Comparative Example 7)

A silicon oxide powder (mixture of silicon oxide and silicon) represented by the general formula SiO was subjected to a CVD process under the atmosphere containing methane gas at 1150°C for 6 hours to obtain a silicon-silicon oxide composite (negative electrode active material) in which silicon in silicon oxide was nano-clustered. The mass ratio of silicon/silicon oxide/carbon was adjusted so as to have about 32/68/0. The same manner as in Example 2 was performed except that the negative electrode active material was used.

### (Comparative Example 8)

The same manner as in Comparative Example 7 was performed except that the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 100/0 by volume (more specifically, EC/PC/DMC/EMC/DEC/HF₂C-CF₂-CH₂-O-CF₂-CF₂H = 12.5/12.5/25/25/25/0), and the mixing ratio of a cyclic fluorinated carbonate (4-fluoro-1,3-dioxolan-2-one) was 5 wt%.

### (Comparative Example 9)

The same manner as in Comparative Example 7 was performed except that the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 80/20 by volume (more specifically, EC/PC/DMC/EMC/DEC/HF₂C-CF₂-CH₂-O-CF₂-CF₂H = 10/10/20/20/20/20), and the mixing ratio of a cyclic fluorinated carbonate (4-fluoro-1,3-dioxolan-2-one) was 0 wt%.

### (Comparative Example 10)

The same manner as in Example 2 was performed except that a composite obtained by mixing silicon (an average particle diameter D50 = 20 µm) and graphite (an average particle diameter D50 = 20 µm) in a mass ratio of 90/10 was used as a negative electrode active material.

### (Comparative Example 11)

The same manner as in Comparative Example 10 was performed except that the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 100/0 by volume (more specifically, EC/PC/DMC/EMC/DEC/HF₂C-CF₂-CH₂-O-CF₂-CF₂H = 12.5/12.5/25/25/25/0), and the mixing ratio of a cyclic fluorinated carbonate (4-fluoro-1,3-dioxolan-2-one) was 5 wt%.

### (Comparative Example 12)

The same manner as in Comparative Example 10 was performed except that the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 80/20 by volume (more specifically, EC/PC/DMC/EMC/DEC/HF₂C-CF₂-CH₂-O-CF₂-CF₂H = 10/10/20/20/20/20), and the mixing ratio of a cyclic fluorinated carbonate (4-fluoro-1,3-dioxolan-2-one) was 0 wt%.

### (Comparative Example 13)

The same manner as in Example 2 was performed except that a composite obtained by mixing silicon oxide (an average particle diameter D50 = 20 µm) and graphite (an average particle diameter D50 = 20 µm) in a mass ratio of 90/10 was used as a negative electrode active material.

### (Comparative Example 14)

The same manner as in Comparative Example 13 was performed except that the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 100/0 by volume (more specifically, EC/PC/DMC/EMC/DEC/HF₂C-CF₂-CH₂-O-CF₂-CF₂H = 12.5/12.5/25/25/25/0), and the mixing ratio of a cyclic fluorinated carbonate (4-fluoro-1,3-dioxolan-2-one) was 5 wt%.

### (Comparative Example 15)

The same manner as in Comparative Example 13 was performed except that the mixing ratio of a nonaqueous solvent, which was prepared by mixing EC/PC/DMC/EMC/DEC in a volume ratio of 1/1/2/2/2, and a linear fluorinated ether (HF₂C-CF₂-CH₂-O-CF₂-CF₂H) was 80/20 by volume (more specifically, EC/PC/DMC/EMC/DEC/HF₂C-CF₂-CH₂-O-CF₂-CF₂H = 10/10/20/20/20/20), and the mixing ratio of a cyclic fluorinated carbonate (4-fluoro-1,3-dioxolan-2-one) was 0 wt%.

### (Comparative Example 16)

The same manner as in Example 2 was performed except that the mixing ratio of a cyclic fluorinated carbonate (4-fluoro-1,3-dioxolan-2-one) was 0 wt%.

### <Evaluation>

The nonaqueous electrolyte secondary batteries thus manufactured were subjected to a cycle test in which charge-discharge was repeated in a constant temperature bath kept at 60°C or 20°C by applying a voltage within the range of 2.5 V to 4.1 V, and capacity retention rate and volume change were evaluated. The test results are shown in Table 1. "Retention rate" in Table 1 represents:
(discharged capacity at the 150th or 50th cycle)/(discharged capacity at the 1st cycle) (unit: %). Furthermore, "bulge" represents:
(volume of battery measured by the Archimedes method after the 150th or 50th cycle)/(volume of battery measured by the Archimedes method before the 1st cycle) (unit: %).
Evaluation was made in accordance with the following criteria.

### [Capacity retention rate]

○: the retention rate is 40% or more.
×: the retention rate is less than 40%.

### [Volume change]

○: bulge is less than 30%.
×: bulge is 30% or more.

### [Table 1]

**Table 1**

| | Si/SiO₂/C | Negative electrode binder | | Linear Fluorinated ether | Cyclic fluorinated carbonate | Cycle test at 20°C, 150th cycle | | | | Cycle test at 60°C, 50th cycle | | | |
|---|---|---|---|---|---|---|---|---|---|---|---|---|---|
| | | | | | | Retention rate | | Bulge | | Retention rate | | Bulge | |
| | (Mass ratio) | Type | (mass %) | (volume %) | (mass %) | (%) | Evaluation | (%) | Evaluation | (%) | Evaluation | (%) | Evaluation |
| Example 1 | 29/61/10 | PVdF | 20 | 20 | 5 | 55 | ○ | 5 | ○ | 50 | ○ | 10 | ○ |
| Example 2 | 29/61/10 | PI | 20 | 20 | 5 | 80 | ○ | 2 | ○ | 70 | ○ | 6 | ○ |
| Example 3 | 29/61/10 | PAI | 20 | 20 | 5 | 78 | ○ | 3 | ○ | 68 | ○ | 8 | ○ |
| Example 4 | 29/61/10 | PI | 5 | 10 | 1 | 52 | ○ | 6 | ○ | 51 | ○ | 13 | ○ |
| Example 5 | 29/61/10 | PI | 5 | 10 | 10 | 53 | ○ | 6 | ○ | 52 | ○ | 18 | ○ |
| Example 6 | 29/61/10 | PI | 5 | 50 | 1 | 52 | ○ | 3 | ○ | 53 | ○ | 7 | ○ |
| Example 7 | 29/61/10 | PI | 5 | 50 | 10 | 55 | ○ | 3 | ○ | 52 | ○ | 13 | ○ |
| Example 8 | 29/61/10 | PI | 25 | 10 | 1 | 65 | ○ | 6 | ○ | 58 | ○ | 9 | ○ |
| Example 9 | 29/61/10 | PI | 25 | 10 | 10 | 67 | ○ | 6 | ○ | 57 | ○ | 15 | ○ |
| Example 10 | 29/61/10 | PI | 25 | 50 | 1 | 75 | ○ | 3 | ○ | 62 | ○ | 6 | ○ |
| Example 11 | 29/61/10 | PI | 25 | 50 | 10 | 70 | ○ | 3 | ○ | 61 | ○ | 12 | ○ |
| Comp. Ex. 1 | 100/0/0 | PI | 20 | 20 | 5 | 46 | ○ | 6 | ○ | 32 | × | 22 | ○ |
| Comp. Ex. 2 | 100/0/0 | PI | 20 | 0 | 5 | 45 | ○ | 5 | ○ | 19 | × | 120 | × |
| Comp. Ex. 3 | 100/0/0 | PI | 20 | 20 | 0 | 22 | × | 6 | ○ | 31 | × | 29 | × |
| Comp. Ex. 4 | 0/100/0 | PI | 20 | 20 | 5 | 39 | × | 5 | ○ | 30 | × | 21 | ○ |
| Comp. Ex. 5 | 0/100/0 | PI | 20 | 0 | 5 | 39 | × | 4 | ○ | 19 | × | 80 | × |
| Comp. Ex. 6 | 0/100/0 | PI | 20 | 20 | 0 | 21 | × | 5 | ○ | 29 | × | 28 | ○ |
| Comp. Ex. 7 | 32/68/0 | PI | 20 | 20 | 5 | 58 | ○ | 5 | ○ | 31 | × | 15 | ○ |
| Comp. Ex. 8 | 32/68/0 | PI | 20 | 0 | 5 | 61 | ○ | 3 | ○ | 22 | × | 71 | × |
| Comp. Ex. 9 | 32/68/0 | PI | 20 | 20 | 0 | 25 | × | 5 | ○ | 35 | × | 25 | ○ |
| Comp. Ex. 10 | 90/0/10 | PI | 20 | 20 | 5 | 58 | ○ | 5 | ○ | 35 | × | 15 | ○ |
| Comp. Ex. 11 | 90/0/10 | PI | 20 | 0 | 5 | 55 | ○ | 5 | ○ | 25 | × | 110 | × |
| Comp. Ex. 12 | 90/0/10 | PI | 20 | 20 | 0 | 34 | × | 5 | ○ | 31 | × | 25 | ○ |
| Comp. Ex. 13 | 0/90/10 | PI | 20 | 20 | 5 | 51 | ○ | 5 | ○ | 34 | × | 16 | ○ |
| Comp. Ex. 14 | 0/90/10 | PI | 20 | 0 | 5 | 48 | ○ | 4 | ○ | 29 | × | 88 | × |
| Comp. Ex. 15 | 0/90/10 | PI | 20 | 20 | 0 | 23 | × | 5 | ○ | 31 | × | 27 | ○ |
| Comp. Ex. 16 | 29/61/10 | PI | 20 | 20 | 0 | 23 | × | 3 | ○ | 51 | ○ | 9 | ○ |

Example 1 is a Reference Example not being part of the invention.

As shown in Table 1, the capacity retention rates and volume change of the nonaqueous electrolyte secondary batteries manufactured in Examples 2 to 11 at cycle tests at 60°C and at 20°C were superior to those of the nonaqueous electrolyte secondary batteries manufactured in Comparative Examples 1 to 16. From the results, it was found that a nonaqueous electrolyte secondary battery using a high energy type negative electrode and usable for a long time can be provided by the exemplary embodiment.

### Industrial Applicability

The exemplary embodiment can be used in various industrial fields requiring power supply and the industrial fields of transporting, storing and supplying electric energy. Specifically, the exemplary embodiment can be used as a power supply for mobile equipment such as mobile telephones and note PCs; a power supply for transfer and transportation medium for electric trains, satellites and submarines including electric vehicles such as electric cars, hybrid cars, electric motorcycles and electric assist bicycles; backup power supply such as UPS; and storage equipment for storing electric power obtained by photovoltaic power generation and wind-generated electricity.

### Explanation of Reference

- a: Negative electrode
- b: Separator
- c: Positive electrode
- d: Negative electrode collector
- e: Positive electrode collector
- f: Positive electrode terminal
- g: Negative electrode terminal

## Claims

1. A nonaqueous electrolyte secondary battery comprising:
an electrode element including a positive electrode and a negative electrode arranged so as to face each other;
a nonaqueous electrolyte; and
a jacket housing the electrode element and the nonaqueous electrolyte,
wherein the negative electrode comprises:
a negative electrode active material containing (a) a carbon material capable of intercalating and deintercalating lithium ions, (b) a metal capable of forming an alloy with lithium, and (c) a metal oxide capable of intercalating and deintercalating the lithium ions;
a negative electrode binder; and
a negative electrode collector,
the negative electrode active material is bound to the negative electrode collector with the negative electrode binder, and
the nonaqueous electrolyte comprises:
a nonaqueous solvent;
a cyclic fluorinated carbonate; and
a linear fluorinated ether,
**characterized in that** the negative electrode binder is polyimide or polyamide imide.

2. The nonaqueous electrolyte secondary battery according to claim 1,
wherein a content of the negative electrode binder in the negative electrode is 5 to 25 parts by mass relative to 100 parts by mass of the negative electrode,
a content of the linear fluorinated ether in the nonaqueous electrolyte is 10 to 50 parts by volume relative to 100 parts by volume of a total of the nonaqueous solvent and the linear fluorinated ether, and
a content of the cyclic fluorinated carbonate in the nonaqueous electrolyte is 1 to 10 parts by mass relative to 100 parts by mass of a total of the nonaqueous solvent and the linear fluorinated ether.

3. The nonaqueous electrolyte secondary battery according to claim 1 or 2,
wherein the linear fluorinated ether is represented by a following formula (2):
H-(CF₂-CF₂)ₙ-CH₂O-CF₂-CF₂-H (2)
where in the formula (2), n is 1 or 2.

4. The nonaqueous electrolyte secondary battery according to any one of claims 1 to 3, wherein the cyclic fluorinated carbonate is fluoroethylene carbonate.

5. The nonaqueous electrolyte secondary battery according to any one of claims 1 to 4, wherein (c) the metal oxide wholly or partly includes an amorphous structure.

6. The nonaqueous electrolyte secondary battery according to any one of claims 1 to 5, wherein (c) the metal oxide is an oxide of the metal constituting (b) the metal.

7. The nonaqueous electrolyte secondary battery according to any one of claims 1 to 6, wherein (b) the metal is wholly or partly dispersed in (c) the metal oxide.

8. The nonaqueous electrolyte secondary battery according to any one of claims 1 to 7, wherein (b) the metal is silicon.

9. The nonaqueous electrolyte secondary battery according to any one of claims 1 to 8, wherein the electrode element includes a planar laminate structure.

10. The nonaqueous electrolyte secondary battery according to any one of claims 1 to 9, wherein the jacket is an aluminum laminate film.

## Patentansprüche

1. Sekundärbatterie mit nicht wässrigem Elektrolyt mit:
einem Elektrodenelement, das eine positive Elektrode und eine negative Elektrode aufweist, die so angeordnet sind, dass sie einander gegenüberliegen;
einem nicht wässrigen Elektrolyt; und
einer Hülle, die das Elektrodenelement und das nicht wässrige Elektrolyt beherbergt,
wobei die negative Elektrode aufweist:
ein negatives aktives Elektrodenmaterial, das enthält: (a) ein Kohlenstoffmaterial, das zum Einlagern und Auslagern von Lithiumionen imstande ist, (b) ein Metall, das zum Bilden einer Legierung mit Lithium imstande ist, und (c) ein Metalloxid, das zum Einlagern und Auslagern der Lithiumionen imstande ist;
ein Bindemittel der negativen Elektrode; und
einen negativen Elektrodenkollektor,
das negative aktive Elektrodenmaterial mit dem Bindemittel der negativen Elektrode an den negativen Elektrodenkollektor gebunden ist, und
das nicht wässrige Elektrolyt aufweist:
ein nicht wässriges Lösungsmittel;
ein zyklisches fluoriertes Karbonat; und
einen linearen fluorierten Ether,
**dadurch gekennzeichnet, dass** das Bindemittel der negativen Elektrode Polyimid oder Polyamidimid ist.

2. Sekundärbatterie mit nicht wässrigem Elektrolyt nach Anspruch 1,
wobei ein Gehalt des Bindemittels der negativen Elektrode in der negativen Elektrode 5 bis 25 Massenteile im Verhältnis zu 100 Massenteilen der negativen Elektrode beträgt, ein Gehalt des linearen fluorierten Ethers im nicht wässrigen Elektrolyt 10 bis 50 Volumenteile im Verhältnis zu 100 Volumenteilen einer Summe des nicht wässrigen Lösungsmittels und des linearen fluorierten Ethers beträgt, und
ein Gehalt des zyklischen fluorierten Karbonats im nicht wässrigen Elektrolyt 1 bis 10 Massenteile im Verhältnis zu 100 Massenteile einer Summe des nicht wässrigen Lösungsmittels und des linearen fluorierten Ethers.

3. Sekundärbatterie mit nicht wässrigem Elektrolyt nach Anspruch 1 oder 2, wobei der lineare fluorierte Ether durch eine folgenden Formel (2) repräsentiert wird:
H-(CF₂-CF₂)ₙ-CH₂O-CF₂-CF₂-H (2)
wobei n in der Formel (2) 1 oder 2 ist.

4. Sekundärbatterie mit nicht wässrigem Elektrolyt nach einem der Ansprüche 1 bis 3, wobei das zyklische fluorierte Karbonat Fluorethylenkarbonat ist.

5. Sekundärbatterie mit nicht wässrigem Elektrolyt nach einem der Ansprüche 1 bis 4, wobei das Metalloxid (c) insgesamt oder teilweise eine amorphe Struktur aufweist.

6. Sekundärbatterie mit nicht wässrigem Elektrolyt nach einem der Ansprüche 1 bis 5, wobei das Metalloxid (c) ein Oxid des Metalls ist, das das Metall (b) bildet.

7. Sekundärbatterie mit nicht wässrigem Elektrolyt nach einem der Ansprüche 1 bis 6, wobei das Metall (b) insgesamt oder teilweise im Metalloxid (c) dispergiert ist.

8. Sekundärbatterie mit nicht wässrigem Elektrolyt nach einem der Ansprüche 1 bis 7, wobei das Metall (b) Silizium ist.

9. Sekundärbatterie mit nicht wässrigem Elektrolyt nach einem der Ansprüche 1 bis 8, wobei das Elektrodenelement eine ebene Laminatstruktur aufweist.

10. Sekundärbatterie mit nicht wässrigem Elektrolyt nach einem der Ansprüche 1 bis 9, wobei Hülle ein Aluminiumlaminatfilm ist.

## Revendications

1. Batterie secondaire à électrolyte non aqueux, comprenant :
un élément d'électrode comprenant une électrode positive et une électrode négative disposées en vis-à-vis ;
un électrolyte non aqueux ; et
un boîtier recevant l'élément d'électrode et l'électrolyte non aqueux, l'électrode négative comprenant :
un matériau actif d'électrode négative contenant une matière carbonée (a) apte à intercaler et à désintercaler des ions lithium, un métal (b) apte à former un alliage avec le lithium, et un oxyde métallique (c) apte à intercaler et à désintercaler les ions lithium ;
un liant d'électrode négative ; et
un collecteur de courant d'électrode négative,
le matériau actif d'électrode négative étant lié au collecteur de courant d'électrode négative par le liant d'électrode négative, et
l'électrolyte non aqueux comprenant :
un solvant non aqueux ;
un carbonate cyclique fluoré ; et
un éther fluoré à chaîne,
**caractérisé en ce que** le liant d'électrode négative est un polyimide ou un polyamide imide.

2. Batterie secondaire à électrolyte non aqueux selon la revendication 1,
où la teneur du liant d'électrode négative dans l'électrode négative est comprise entre 5 et 25 parties en masse par rapport à 100 parties en masse de l'électrode négative,
la teneur de l'éther fluoré à chaîne dans l'électrolyte non aqueux est comprise entre 10 et 50 parties en volume par rapport à 100 parties en volume du total du solvant non aqueux et de l'éther fluoré à chaîne, et
la teneur du carbonate cyclique fluoré dans l'électrolyte non aqueux est comprise entre 1 et 10 parties en masse par rapport à 100 parties en masse du total du solvant non aqueux et de l'éther fluoré à chaîne.

3. Batterie secondaire à électrolyte non aqueux selon la revendication 1 ou la revendication 2, où l'éther fluoré à chaîne est représenté par la formule (2) suivante :
H-(CF₂-CF₂)ₙ-CH₂0-CF₂-CF₂-H (2)
n étant égal à 1 ou 2 dans ladite formule (2).

4. Batterie secondaire à électrolyte non aqueux selon l'une des revendications 1 à 3, où le carbonate cyclique fluoré est un carbonate de fluoroéthylène.

5. Batterie secondaire à électrolyte non aqueux selon l'une des revendications 1 à 4, où l'oxyde métallique (c) présente une structure amorphe en totalité ou en partie.

6. Batterie secondaire à électrolyte non aqueux selon l'une des revendications 1 à 5, où (c) l'oxyde métallique est un oxyde du métal constituant le métal (b).

7. Batterie secondaire à électrolyte non aqueux selon l'une des revendications 1 à 6, où le métal (b) est dispersé en totalité ou en partie dans l'oxyde métallique (c).

8. Batterie secondaire à électrolyte non aqueux selon l'une des revendications 1 à 7, où le métal (b) est le silicium.

9. Batterie secondaire à électrolyte non aqueux selon l'une des revendications 1 à 8, où l'élément d'électrode présente une structure stratifiée plane.

10. Batterie secondaire à électrolyte non aqueux selon l'une des revendications 1 à 9, où le boîtier est un film stratifié d'aluminium.
